# EUROPEAN PATENT APPLICATION

(11) **EP 1 816 840 A1**
(43) Date of publication of application: **08.08.2007**
(21) Application number: 06022524.0
(22) Date of filing: 27.10.2006
(51) Int. Cl.: H04M 7/00, H04L 29/06

(54) **Device supporting multiple pathway telephony bridging**

(30) Priority: 07.02.2006 US 348962; 07.02.2006 US 348814; 07.02.2006 US 348743; 06.06.2006 US 448458
(71) Applicant: Broadcom Corporation, Irvine, CA 92617 (US)
(72) Inventor: Bennett, James D., San Clemente, CA 92672 (US); Karaoguz, Jeyhan, Irvine, CA 92606 (US)
(74) Representative: Jehle, Volker Armin

(57) **Abstract**

An auxiliary bridging device operates within infrastructure that includes a packet data network (Internet) and the Public Switched Telephone Network (PSTN) telephony network and supports a coupled POTS telephony device. The auxiliary bridging device is operable to bridge calls between every two of the POTS telephony device, the PSTN network, and the packet data network (Internet). The auxiliary bridging device selectively bridges incoming calls to the POTS telephony device, to remote PSTN terminals, and to remote VoIP terminals based upon telephony bridging instructions. These telephony bridging instructions may be stored locally or remotely.

## Description

### CROSS REFERENCES TO RELATED APPLICATIONS

This application is a continuation-in-part of the following co-pending applications:
1. Utility Application Serial No. 11/348,962, filed on February 7, 2006, and entitled "TELEPHONE SUPPORTING BRIDGING BETWEEN A PACKET SWITCHED NETWORK AND THE PUBLIC SWITCHED TELEPHONE NETWORK";
2. Utility Application Serial No. 11/348,814, filed on February 7, 2006, and entitled "COMPUTING DEVICE SUPPORTING BRIDGING BETWEEN A PACKET SWITCHED NETWORK AND THE PUBLIC SWITCHED TELEPHONE NETWORK"; and
3. Utility Application Serial No. 11/348,743, filed on February 7, 2006, and entitled "SET TOP BOX SUPPORTING BRIDGING BETWEEN A PACKET SWITCHED NETWORK AND THE PUBLIC SWITCHED TELEPHONE NETWORK".

### BACKGROUND OF THE INVENTION

### 1. TECHNICAL FIELD OF THE INVENTION

This invention relates generally to communication systems and more particularly to Voice over Internet Protocol (VoIP) telephony and to Public Switched Telephone Network (PSTN) telephony.

### 2. DESCRIPTION OF RELATED ART

Voice telephony has been known for many years. Initially, voice telephony was supported by dedicated conductors between telephones. Then, voice telephony was enabled by operators manually switching connectors to create and tear down circuits between telephones. As technology advanced, mechanical components performed the switching operations to create and tear down circuits between telephones. With advancing technology, computers and semiconductor components replaced the mechanical components to perform circuit switching duties. Networks created using this circuit-switched technology are generally known as the Public Switched Telephone Network (PSTN). Generally, the PSTN provides a circuit-switched, time-divided connection between telephones.

Packet data communications, such as those supported by the Internet, differ from circuit-switched communications. With packet data communications, a source device forms a data packet, transmits the data packet to a packet data network, and based upon a destination address, e.g., Internet Protocol (IP) address of the data packet, the packet data network passes the data packet to a destination device. As the Internet and other packet data networks grew in popularity, packet switched voice telephony was developed. One common type of packet switched voice telephony is Voice over Internet Protocol (VoIP) telephony. When VoIP telephony was first introduced, the data packet transmission latency of the Internet and of other servicing networks caused the quality of VoIP telephony to be significantly worse than that of PSTN telephony. Over time, packet data transmission latency of the Internet and of other servicing packet data networks has decreased. Now, VoIP telephony provides service quality equal to or better than VoIP telephony in many cases.

Recently developed VoIP telephony applications enable computer users to establish non-toll VoIP telephone calls across the Internet. Compared to PSTN telephony VoIP telephony of this type is significantly less expensive, particularly for overseas calls. However, only a limited number of people have a computer upon which this VoIP telephony application may be loaded and have Internet access of a quality that will support the VoIP telephony application.

In order to gain some advantages of VoIP telephony but still service consumers having PSTN telephones, VoIP telephony service providers typically deploy VoIP gateways. The VoIP gateways bridge communications between the PSTN (PSTN telephony call) and the Internet (VoIP telephony call). VoIP telephony service providers typically extract a toll for servicing a call via the VoIP gateway bridge, thus destroying in part the low cost attractiveness of VoIP telephony. Thus, a need exists for systems and methods of operations that overcome the shortcomings of these prior telephony systems.

### BRIEF SUMMARY OF THE INVENTION

The present invention is directed to apparatus and methods of operation that are further described in the following Brief Description of the Drawings, the Detailed Description of the Drawings, and the Claims.

According to an aspect of the invention, an auxiliary bridging device is provided used in a telephony infrastructure, the telephony infrastructure having a (Plain Old Telephone Service) POTS telephony device, a circuit switched telephony network, and a packet switched telephony network, the auxiliary bridging device comprising:
POTS driver circuitry that generates and delivers POTS signaling to the POTS telephony device;
packet switched interface circuitry that supports a call pathway to the packet switched telephony network;
circuit switched interface circuitry that supports a call pathway to the circuit switched telephony network;
processing circuitry coupled to the POTS driver circuitry, the circuit switched interface circuitry, and the packet switched interface circuitry; and
the processing circuitry operable to bridge calls between every two of the POTS driver circuitry, the circuit switched interface circuitry, and the packet switched interface circuitry.
Advantageously, the POTS signaling is equivalent to POTS signaling provided by a Central Office of a PSTN telephone company over twisted pair wiring to a POTS telephone.

Advantageously, in the processing circuitry operable to bridge calls between every two of the POTS driver circuitry, the circuit switched interface circuitry, and the packet switched interface circuitry, the processing circuitry is operable to bridge calls:
between the POTS driver circuitry and the packet switched interface circuitry;
between the POTS driver circuitry and the circuit switched interface circuitry; and
between the circuit switched interface circuitry and the packet switched interface circuitry.

Advantageously, the packet switched interface circuitry comprises a personal computer bus interface.

Advantageously, the auxiliary bridging device further comprises a housing to fit within an expansion card opening of a personal computer supporting the personal computer bus interface, the housing containing at least a substantial portion of the POTS driver circuitry, the packet switched interface, the circuit switched interface, and the processing circuitry.

Advantageously, the processing circuitry is further operable to:
track a corresponding subscriber; and
store in memory at least one current IP address of a VoIP terminal corresponding to the subscriber.

Advantageously, the processing circuitry is further operable to:
track a corresponding subscriber; and
store in memory a current PSTN number corresponding to the subscriber.

Advantageously, the processing circuitry is further operable to:
receive a PSTN call request relating to an incoming call via the circuit switched interface circuitry;
create a Voice over Internet Protocol (VoIP) call request based upon the PSTN call request; and
send the VoIP call request via the packet switched interface circuitry.

Advantageously, the processing circuitry is further operable to:
receive a Voice over Internet Protocol (VoIP) call request relating to an incoming call via the packet switched interface circuitry;
create a PSTN call request based upon the VoIP call request; and
send the PSTN call request via the circuit switched interface circuitry.

Advantageously, the processing circuitry is further operable to:
retrieve telephony bridging instructions from local memory; and
bridge an incoming call based upon the telephony bridging instructions.

Advantageously, the processing circuitry is further operable to:
receive telephony bridging instructions with an incoming call; and
bridge the incoming call based upon the telephony bridging instructions.

Advantageously, the processing circuitry is further operable to:
query a tracking server;
receive telephony bridging instructions from the tracking server that includes a destination network address of a terminal;
bridge an incoming call based upon the telephony bridging instructions.

Advantageously, the processing circuitry is further operable to:
attempt local termination of an incoming call via the POTS driver circuitry; and
when local termination of the incoming call is not successful, bridge the incoming call via one of the circuit switched interface circuitry and the packet switched interface circuitry.

Advantageously, the processing circuitry is further operable to:
determine a destination packet data network address for an incoming call; and
determine whether call bridging is enabled for the call based upon the destination packet data network address for the incoming call.

Advantageously, the processing circuitry is further operable to:
determine a called PSTN number for an incoming call; and
determine whether call bridging is enabled for the incoming call based upon the called PSTN number for the call.

Advantageously, the processing circuitry is further operable to:
determine a source packet data network address of an incoming call; and
determine whether call bridging is enabled for the incoming call based upon the source packet data network address of the incoming call.

Advantageously, the processing circuitry is further operable to:
determine a calling line identifier (CLID) number of an incoming call; and
determine whether call bridging is enabled for the incoming call based upon the CLID number of the call.

According to an aspect of the invention, an auxiliary bridging circuitry is provided used in telephony infrastructure, the telephony infrastructure having a POTS (Plain Old Telephone Service) telephony device and a packet switched telephony network, the auxiliary bridging circuitry comprising:
POTS driver circuitry, coupled to the POTS telephony device, that detects an absence of POTS signaling, and the POTS driver circuitry responds to the detected absence by generating and delivering substitute POTS signaling to the POTS telephony device;
packet switched interface circuitry that supports a first pathway to the packet switched telephony network;
processing circuitry coupled to the POTS driver circuitry and the packet switched interface circuitry; and
the processing circuitry operable to selectively bridge calls between the POTS driver circuitry and the packet switched interface circuitry.

Advantageously, the substitute POTS signaling is equivalent to POTS signaling provided by a Central Office of a PSTN telephone company over twisted pair wiring to a POTS telephone.

Advantageously, the packet switched interface circuitry comprises a personal computer bus interface.

Advantageously, the auxiliary bridging circuitry further comprises a housing to fit within an expansion card opening of a personal computer supporting the personal computer bus interface, the housing containing at least a substantial portion of the POTS driver circuitry, the packet switched interface circuitry, and the processing circuitry.

According to an aspect of the invention, an auxiliary bridging device is provided used in a telephony infrastructure, the telephony infrastructure supporting a (Plain Old Telephone Service) POTS telephony device and a personal computing device, the auxiliary bridging device comprising:
POTS driver circuitry that generates and delivers POTS signaling to the POTS telephony device;
interface circuitry coupled to the personal computing device;
processing circuitry coupled to the POTS driver circuitry and the interface circuitry; and
the processing circuitry operable to selectively bridge calls between the POTS driver circuitry and the personal computing device.

Advantageously, the interface circuitry comprises a personal computer bus interface.

Advantageously, the processing circuitry operable to convert the calls between a POTS telephony format and a Voice over Internet Protocol (VoIP) format.

According to an aspect of the invention, a telephony infrastructure is provided supporting a packet switched telephony device, a first circuit switched telephony device, and a second circuit switched telephony device, the telephony infrastructure comprising:
a circuit switched telephony network coupled to the first circuit switched telephony device;
a packet switched telephony network coupled to the packet switched telephony device;
auxiliary bridging circuitry that generates and delivers (Plain Old Telephone Service) POTS signaling to the second circuit switched telephony device; and
the auxiliary bridging circuitry operable to selectively bridge calls between the second circuit switched telephony device and each one of the packet switched telephony device and the first circuit switched telephony device.

Advantageously, the auxiliary bridging circuitry is further operable to bridge calls between the first circuit switched telephony device and the packet switched telephony device.

Advantageously, the auxiliary bridging circuitry is further operable:
track a corresponding subscriber; and
store in memory at least one current IP address of a VoIP terminal corresponding to the subscriber.

Advantageously, the auxiliary bridging circuitry is further operable:
track a corresponding subscriber; and
store in memory a current PSTN number corresponding to the subscriber.

Advantageously, the auxiliary bridging circuitry is further operable:
receive a PSTN call request relating to an incoming call via the circuit switched telephony network;
create a Voice over Internet Protocol (VoIP) call request based upon the PSTN call request; and
send the VoIP call request via the packet switched telephony network.

Advantageously, the auxiliary bridging circuitry is further operable:
receive a Voice over Internet Protocol (VoIP) call request relating to an incoming call via the packet switched telephony network;
create a PSTN call request based upon the VoIP call request; and
send the PSTN call request via the circuit switched telephony network.

According to an aspect of the invention, a method is provided comprising:
delivering (Plain Old Telephone Service) POTS signaling, by an auxiliary bridging device, to a coupled POTS telephony device;
supporting, by the auxiliary bridging device, a call pathway to the coupled POTS telephony device;
supporting, by the auxiliary bridging device, a call pathway to a packet switched telephony network;
supporting, by the auxiliary bridging device, a call pathway to a circuit switched telephony network; and
bridging, by the auxiliary bridging device, calls between every two of the POTS telephony device, the circuit switched telephony network, and the packet switched telephony network.

Advantageously, the POTS signaling is equivalent to POTS signaling provided by a Central Office of a PSTN telephone company over twisted pair wiring to a POTS telephone.

Advantageously, the every two of the POTS telephony device, the circuit switched telephony network, and the packet switched telephony network comprises:
the POTS telephony device and the circuit switched telephony network;
the POTS telephony device and the packet switched telephony network; and
the circuit switched telephony network and the packet switched telephony network.

According to an aspect of the invention, there is provided a method for operating an auxiliary bridging device having a (Plain Old Telephone Service) POTS telephone interface, a packet switched interface, and a circuit switched interface, the method comprising:
detecting the presence or absence of POTS signaling at the circuit switched interface;
when POTS signaling is not present at the circuit switched interface, the auxiliary bridging device producing and delivering POTS signaling to a coupled POTS telephony device;
when POTS signaling is present at the circuit switched interface, the auxiliary bridging device coupling the circuit switched interface to the POTS telephone interface;
supporting a first call pathway between the POTS telephone interface and the packet switched interface;
supporting a second call pathway between the POTS telephone interface and the packet switched interface;

Advantageously, the method further comprises supporting a third call pathway between the circuit switched interface and the packet switched interface.

Other features and advantages of the present invention will become apparent from the following detailed description of the invention made with reference to the accompanying drawings.

### BRIEF DESCRIPTION OF THE SEVERAL VIEWS OF THE DRAWINGS

FIG. 1 is a system diagram illustrating a plurality of auxiliary bridging devices construction according to the present invention and their interaction with a telephony infrastructure;
FIG. 2 is a system diagram illustrating a plurality of auxiliary bridging devices construction according to the present invention and their interaction with a telephony infrastructure;
FIG. 3 is a system diagram illustrating a telephony infrastructure that includes an auxiliary bridging device constructed and operating according to an embodiment of the present invention;
FIG. 4 is a system diagram illustrating a telephony infrastructure that includes an auxiliary bridging device constructed and operating according to an embodiment of the present invention;
FIG. 5 is a block diagram illustrating an auxiliary bridging device constructed according to an embodiment of the present invention;
FIG. 6 is a flow chart illustrating operation of an auxiliary bridging device according to an embodiment of the present invention;
FIG. 7 is a flow chart illustrating PSTN to VoIP bridging operations of an auxiliary bridging device in accordance with an embodiment of the present invention;
FIG. 8 is a flow chart illustrating VoIP to PSTN bridging operations of an auxiliary bridging device in accordance with an embodiment of the present invention;
FIG. 9 is a flow chart illustrating VoIP to VoIP bridging operations of an auxiliary bridging device in accordance with an embodiment of the present invention;
FIG. 10 is a flow chart illustrating bridging setup operations of an auxiliary bridging device in accordance with an embodiment of the present invention;
FIG. 11 is a flow chart illustrating tracking server setup/update operations in accordance with an embodiment of the present invention;
FIG. 12 is a flow chart illustrating tracking server access operations in accordance with an embodiment of the present invention;
FIG. 13 is a flow chart illustrating message server bridging operations in accordance with an embodiment of the present invention; and
FIG. 14 is a flow chart illustrating call setup operations in accordance with an embodiment of the present invention.

### DETAILED DESCRIPTION OF THE INVENTION

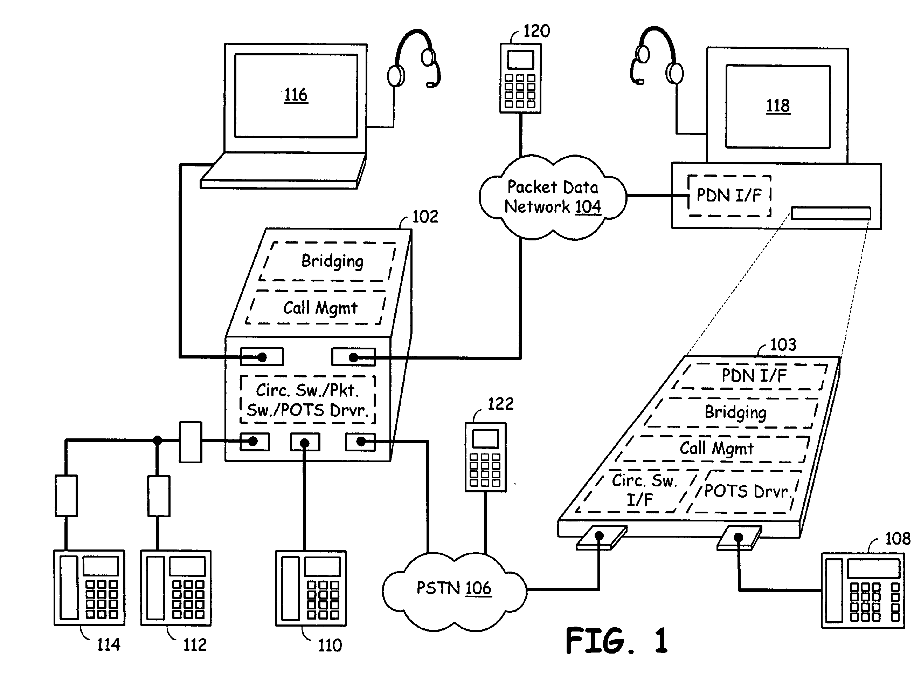

FIG. 1 is a system diagram illustrating a plurality of auxiliary bridging devices construction according to the present invention and their interaction with a telephony infrastructure. Each of auxiliary bridging devices 102 and 103 intercouples to both a circuit switched telephony network (PSTN network 106) and a packet switched network (packet data network 104). Each of the auxiliary bridging devices 102 and 103 services at least one coupled Plain Old Telephone System (POTS) telephony device. Auxiliary bridging device 102 services POTS telephony devices 110, 112, and 114. Likewise, auxiliary bridging device 103 services POTS telephony device 108. In servicing the POTS telephony device, auxiliary bridging device 102 may service the device via twisted pair copper wiring, a wireless interface, or another connection via POTS driver circuitry. Generally, the auxiliary bridging device 102 provides POTS signaling to one or more POTS telephony devices 110, 112, and 114, the POTS signaling is equivalent to POTS signaling that would otherwise be provided by a central office, an accumulator, or other PSTN network 106 device. Likewise, auxiliary bridging device 108, in servicing POTS telephony device 108, provides POTS signaling via twisted pair wiring, other wiring, or a wired interface that support such POTS telephony. The auxiliary bridging device 102 may provide POTS signaling to the plurality of POTS telephony devices 110, 112, and 114 via existing twisted pair copper wiring existing within a serviced premises.

Auxiliary bridging devices 102 and 103 couple to the PSTN network 106 via wired and/or wireless connections. Thus, for example, each of auxiliary bridging device 102 and 103 includes a circuit switched interface that communicatively couples the auxiliary bridging device 102 or 103 to the PSTN network 106. The wired connections may be serviced via twisted copper pair wiring, fiber optic cabling, or another type of conductor.

Auxiliary bridging devices 102 and 103 also couple to packet data network 104 via wired and/or wired connections. Auxiliary bridging device 102 couples directly to the packet data network 104 via its packet switched interface. Such direct connection may be via a local area network, cable modem, satellite modem, digital subscriber line, fixed wireless access, wireless local area network (WLAN) access, metropolitan wireless area network access (YMAX), or another packet switched interface connection. The auxiliary bridging device 102 supports communication with personal computer 116 via personal computer interface, e.g., LAN connection, WLAN connection, USB connection, fire wire connection, or another data interface.

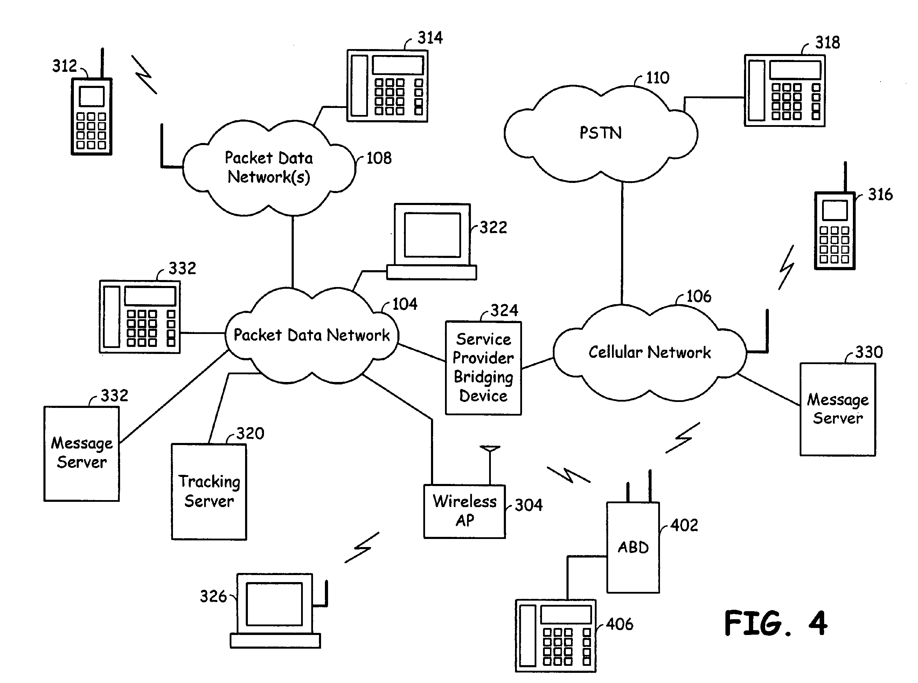

Auxiliary bridging device 103 couples to packet data network 104 via a personal computer 118. A packet data network interface of the auxiliary bridging device 103 includes a personal computer bus interface that supports packet switched communications between the auxiliary bridging device 103 and the personal computer 118. Personal computer 118 supports packet switched communication between the auxiliary bridging device 103 and the packet data network 104 via a packet data network interface of the personal computer 118. The auxiliary bridging device 103 may be formed within a housing so that the auxiliary bridging device 103 may fit within an expansion card opening of personal computer 118. Such housing may contain all or a substantial portion of the POTS driver circuitry of, the packet switched interface, the circuit switched interface, and the processing circuitry of auxiliary bridging device 103. The general structure of auxiliary bridging devices 102 and 103 will be described further with reference to FIG. 4.

Generally, each of the auxiliary bridging devices 102 and 103 has interfaces to its supported POTS telephony device(s), the packet switched network 104, and the PSTN network 106. According to a first aspect to the present invention, each of the auxiliary bridging devices 102 and 103 is operable to bridge calls between every two of its POTS driver circuitry, its circuit switched interface, and its packet switched interface. In particular, in a first operation, auxiliary bridging device 103 is operable to bridge calls between its POTS driver circuitry (that services POTS telephony device 108) and its packet switched interface circuitry (that couples to packet data network 104). Thus, with this first operation, the auxiliary bridging device 103 is operable to bridge calls between the POTS telephony device 108 and VoIP telephone 120, for example. Further, according to this first operation, the auxiliary bridging circuitry 103 is operable to bridge a call between the POTS telephony device 108 and personal computer 116 (having headset connected thereto). With a second operation, the auxiliary bridging device 103 is operable to bridge calls between its POTS driver circuitry and its circuit switched interface. With the second operation, the auxiliary bridging device 103 is operable to bridge calls between the serviced POTS telephony device 108 and a PSTN telephone 122, for example. Further, according to a third operation of the auxiliary bridging device 103, the auxiliary bridging device 103 is operable to bridge calls between its circuit switched interface and its packet switched interface. With this operation, the auxiliary bridging device 103 is operable to bridge a call between PSTN telephone 122 and VoIP telephone 120, for example. According to this third operation particularly, auxiliary bridging device 103 supports the interface to PSTN telephone 122 via its circuit switched interface and the VoIP telephone 120 via its packet switched interface.

According to another aspect of the present invention, the auxiliary bridging devices 102 and 103 perform call management operations. With these call management operations, auxiliary bridging device 102, for example, receives a PSTN call setup request from PSTN phone 122 relating to an incoming call via the PSTN network 106. In response to receipt of this PSTN call setup request, the auxiliary bridging device creates a VoIP call request based upon the PSTN call request. Then, the auxiliary bridging device 102 sends the VoIP call request to VoIP telephone 120 via the packet switched telephony network 104.

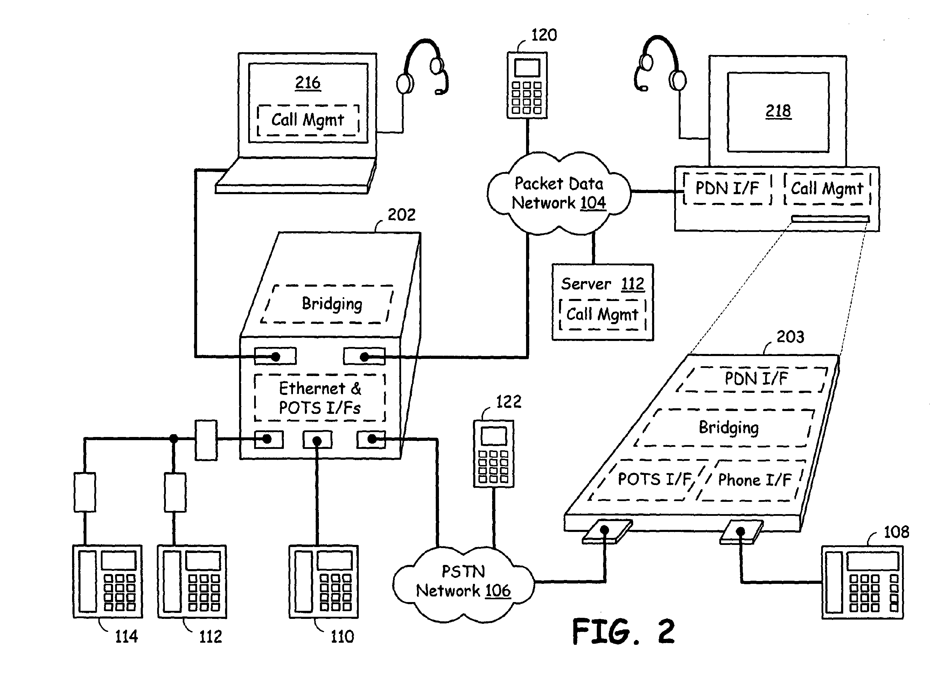

Likewise, the auxiliary bridging device 102 is operable to receive a VoIP call setup request relating to an incoming call via the packet switched telephony network 104 from VoIP telephone 120. In response thereto, the auxiliary bridging device 102 creates a PSTN call setup request based upon the VoIP call request. Then, the auxiliary bridging device 102 sends the PSTN call request via the PSTN network 106 to PSTN telephone 122. These operations may also be supported between other VoIP telephony devices such as personal computers 116 and 118. Other aspects and operations of the auxiliary bridging devices 102 and 103 and their interaction with the packet switched network 104 and the PSTN network 106 will be described further with reference to FIGs. 2 - 14.

FIG. 2 is a system diagram illustrating a plurality of auxiliary bridging devices construction according to the present invention and their interaction with a telephony infrastructure. Auxiliary bridging devices 202 and 203 communicatively couple to the packet switched network 104 and to the circuit switched network 106. Auxiliary bridging devices 202 and 203 of FIG. 2 include components same or similar to those previously described with reference to auxiliary bridging devices 102 and 103 of FIG. 1, respectively. Further, the components illustrated in FIG. 2 having common numbering to those previously described in FIG. 1 will not be described further herein with reference to FIG. 2, except as it relates to the additional teachings of FIG. 2. According to the embodiment of FIG. 2, call management functionality (that was performed by the auxiliary bridging devices 102 and 103 of FIG. 1) is performed by personal computers 216 and 218 of FIG. 2. Personal computers 216 and 218 run software applications that assist the operation of the auxiliary bridging devices 202 and 203. In particular, software applications running on personal computers 216 and 218 allow a user to setup thereon the operations of the auxiliary bridging devices 202 and 203. A user or owner of personal computer 218 sets up auxiliary bridging device 203 for call forwarding and its other operations via personal computer 218. When the users desires to alter the call bridging and/or call management operations of the auxiliary bridging device 203 when direct access to computer 218 is not available, the user may access computer 218 via the packet data network 104 via a remote terminal to alter the setup of the auxiliary bridging device 203.

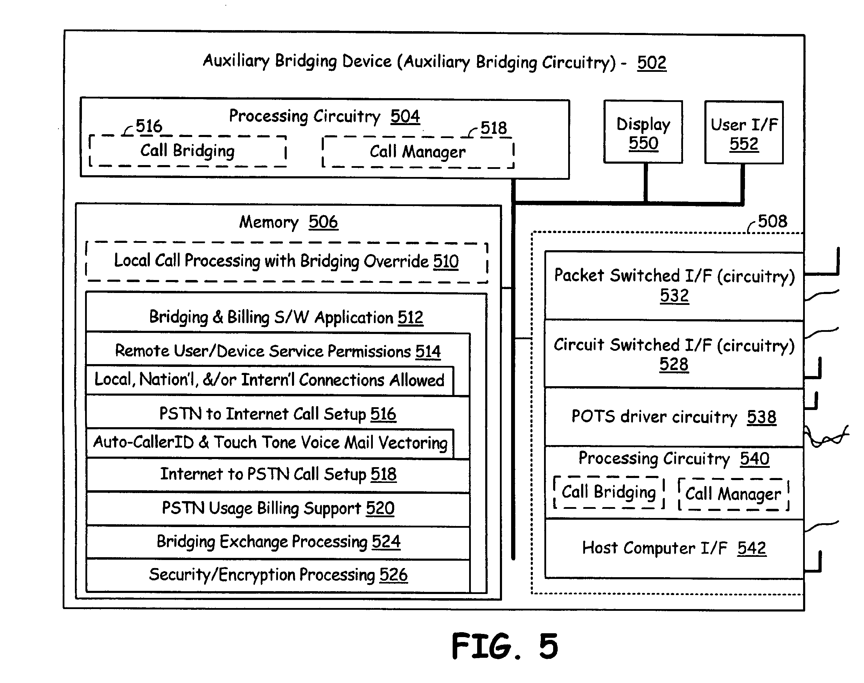

Remote setup may relate to call subscriber tracking and call forwarding operations that will be described further herein with reference to FIGs. 5 - 14. Further shown in FIG. 2 is a server 112 that performs call management operations. The call management operations performed by server 112 operate in conjunction with the auxiliary bridging devices 202 and 203 to manage call forwarding and tracking operations for the owner/subscribers to the auxiliary bridging devices 202 and 203.

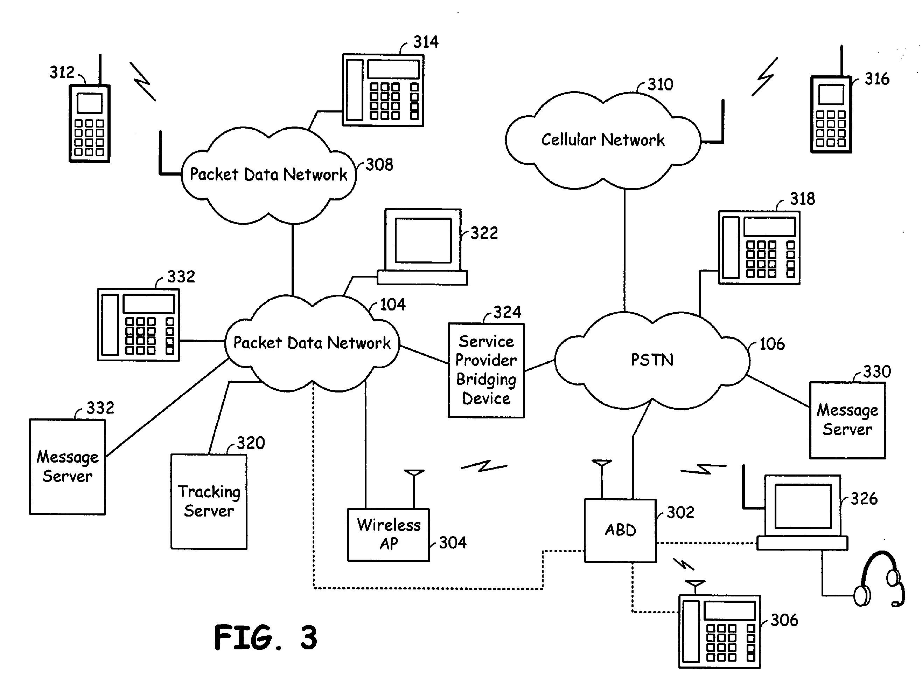

FIG. 3 is a system diagram illustrating a telephony infrastructure that includes an auxiliary bridging device constructed and operating according to an embodiment of the present invention. FIG. 3 retains common numbering of same/similar elements with FIGs. 1 and 2. Auxiliary bridging device 302 couples via a wired connection to PSTN 106, wirelessly couples to packet data network 104 via wireless access point 304, and wired/wirelessly couples to POTS telephony device 306. Computer 326 wirelessly couples to auxiliary bridging device 302 and to wireless access point 304. The wireless access point 304 supports WLAN and/or Wireless Personal Area Network (WPAN) communications. The WLAN communications may operate according to any of the IEEE 802.11 standards such as IEEE 802.11a, IEEE 802.11b, IEEE 802.11g, IEEE 802.11n, or another WLAN operating standard. WPAN operations may be according to the Bluetooth operating standard or the IEEE 802.15 operating standard, for example.

As was the case with auxiliary bridging devices 102, 103, 102, and 103 of FIGs. 1 and 2, auxiliary bridging device 302 is operable to bridge calls between the packet data network 104 and the PSTN 106, between the packet data network 104 and POTS telephony device 306, and between the packet data network 104 and POTS telephony device 306. Auxiliary bridging device 302 is also operable to perform call management functions, subscriber tracking functions, and other functions previously described and that will be more fully described hereinafter.

The auxiliary bridging device 302 may be located within a home, an office, or another location wherein a telephone would conventionally be located. Packet data network(s) 308 communicatively couple to packet data network 104. VoIP telephone 332, tracking server 320, computer 322, and message server 332 couple to packet data network 104. Wireless Voice over Internet Protocol (VoIP) terminal 312 and wired VoIP telephone 314 communicatively couple to packet data network(s) 308. The packet data network(s) 308 may be one or more of a WAN, a LAN, a Worldwide Interoperability for Microwave Access (WiMAX) network, one or more Wireless Local Area Networks (WLANs), or another type of packet data network. Generally, each of the VoIP telephone 332 and 314 as well as wireless VoIP terminal 312 and computer 322 support VoIP telephony. Auxiliary bridging device 302 may communicate with any of the VoIP telephones 332, 312, and 314, VoIP terminal 311, and computer 322 via the packet data network 104 and the packet data network(s) 308.

PSTN telephone 318 couples to the PSTN 106. Cellular network 310 couples to PSTN 106 and supports cellular telephone 316. Message server 330 couples to PSTN 106. Auxiliary bridging device 302 may establish a PSTN telephone call with PSTN telephone 318 via the PSTN 106. Auxiliary bridging device 302 may establish a PSTN telephone call with cellular telephone 316 via the PSTN 106 and the cellular network 310. The cellular network 310, in other embodiments, has direct connectivity with the packet data network 104 and/or the packet data network 308 and supports VoIP telephony.

Service provider bridging device 324 couples between the packet data network 104 and to the PSTN 106. The service provider bridging device 324 may be a VoIP gateway or another type of device operable to bridge calls between a VoIP telephony format and a PSTN telephony format. The service provider bridging device 324 may perform additional functions as well, such as billing, VoIP number data base functions, call setup, and VoIP subscriber services, among others.

Generally, according to the present invention, auxiliary bridging device 302 is operable to setup and/or bridge telephone calls between the packet data network 104 and the PSTN 106 based upon telephony bridging instructions. The auxiliary bridging device 302 and, optionally the computer 326 include(s) bridging circuitry (not shown). While the auxiliary bridging device 302 controls bridging and the setup of bridging operations, computer 326 may assist in the bridging setup and bridging operations according to embodiments of the present invention. A "handle" is an identifier used uniquely to identify a subscriber or group of subscribers of the system. For example, an owner of an auxiliary bridging device may be a subscriber to the system. As another example, all residents of a premises containing the auxiliary bridging device may share a handle. The subscriber's location (terminal ID, IP address, etc.) is tracked by the system and associated with the handle. This handle is used in bridging calls, in forwarding calls, and in otherwise terminating calls.

In bridging calls between the PSTN 106 and the packet data network 104, the auxiliary bridging device 302 reformats calls between a PSTN telephony format (circuit switched) and a VoIP telephony format (VoIP data packets). The telephony bridging instructions may be locally generated and stored. Alternately, some or all of the telephony bridging instructions may be remotely generated and stored. Telephony bridging instructions may be remotely stored by computer 326, by tracking server 320, or by another device coupled to the auxiliary bridging device 302. The tracking server 320 or computer 326 may assist in the tracking of the location(s) of particular users/voice terminal(s). Thus, the auxiliary bridging device 302 may communicate with the tracking server 320 and/or the computer 326 to obtain some or all of the telephony bridging instructions.

In one operation according to the present invention, auxiliary bridging device 302 receives an incoming PSTN call from the PSTN 106. Such incoming PSTN call may originate from cellular terminal 316 or PSTN telephone 318, for example. The PSTN call is incoming and directed to a PSTN telephone number respective to auxiliary bridging device 302. The PSTN call may also include a Calling Line Identifier (CLID) associated with a calling cellular telephone 316 or PSTN telephone 318. In response to the incoming PSTN telephone call, auxiliary bridging device 302 checks for telephony bridging instructions for the call. Depending on its setup configuration, the auxiliary bridging device 302 searches for such telephony bridging instructions locally, at the local computer 326, and/or at the tracking server 320. In some operations, the auxiliary bridging device 302 searches more than one location for the telephony bridging instructions. In addition, telephony bridging instructions may be passed to the auxiliary bridging device 302 as part of the incoming PSTN telephone call either via a bridging identifier embedded within the CLID or within any another digital signaling supported by the PSTN 106. In other installations, the auxiliary bridging device 302 may couple directly between the cellular network 310 and bridge calls between the cellular network 310 and packet data network 104 (or 308).

In another operation, the auxiliary bridging device 302 receives an incoming VoIP call via the packet data network 104. Such incoming VoIP call may originate from VoIP terminal 312, VoIP terminal 314, VoIP terminal 332, or VoIP enabled computer 322, for example. The VoIP call is incoming and directed to an Internet Protocol (IP) address respective to auxiliary bridging device 302. The VoIP call includes a source IP address associated with a calling VoIP terminal. In response to the incoming VoIP telephone call, auxiliary bridging device 302 checks for telephony bridging instructions for the call. Depending on its setup configuration, the auxiliary bridging device 302 searches for telephony bridging instructions locally, at a local computer, e.g., computer 326, and/or at the tracking server 320. In response to the incoming VoIP call, auxiliary bridging device 302 checks for telephony bridging instructions for the VoIP call. Further, telephony bridging instructions for the VoIP call may be passed to the auxiliary bridging device 302 as part of an incoming VoIP telephone call either via a bridging identifier embedded within one or more incoming packets or within any another digital signaling supported by the Packet data network 104.

The telephony bridging instructions obtained by auxiliary bridging device 302 are employed by the auxiliary bridging device 302 either to bridge the telephone call from the PSTN 106 to the packet data network 104 or to terminate the incoming PSTN telephone call to the POTS telephony device 306. When terminating an incoming PSTN telephone call, auxiliary bridging device 302 provides an alert signal to a user, e.g., ring tone, to the coupled POTS telephony device 306 via its POTS driver circuitry, and enables the user to terminate the PSTN telephone call to the POTS telephony device 306 in a conventional manner. Alternatively, the auxiliary bridging device 302 forwards the incoming PSTN telephone call to voice mail. No matter whether the incoming call is incoming via the PSTN 106 or the packet data network 104, the auxiliary bridging device 302 may be configured to respond by retrieving the bridging instructions (bridging or forwarding) in any or all of the following: 1) local memory; 2) one or more remote servers; 3) one or more PSTN supported packets delivered in association with a PSTN call, e.g., via CLID that is "highjacked" to contain bridging instructions or otherwise used to extract a bridging or forwarding instructions or via any other type of digital packet or packets currently supported or that might be supported by PSTN in the future; and 4) one or more packet data network packets, e.g., to find bridging and/or routing instructions/requests. The remote server(s) 320 may be checked in response to each incoming call or only periodically with results being stored in local memory of the auxiliary bridging device 302.

Telephony bridging instructions may be added by a user via: 1) a user interface of the auxiliary bridging device 302 for storage in local memory and/or at the remote server; 2) the computer 326 directly attached to the auxiliary bridging device 302 via any direct wired or wireless link for storage in local memory and/or at the remote server; and/or 3) a computer 322 attached to the packet data network 104 for storage in local memory and/or at the remote server 320. Most telephony bridging instructions are prepared before any PSTN or packet data network calls are received. Instructions may also be delivered by a user via an input interface of the auxiliary bridging device 302 as part of the incoming call setup or during an ongoing call. Likewise, the calling party can interact via a user input interface of the calling device prior to a call attempt (possibly as part of a phone book or through preliminary interaction before attempting to set up a call), during call setup (with local and/or auxiliary bridging device 302 interaction), and during the ongoing call itself (with local and auxiliary bridging device 302 interaction).

Typical telephony bridging instructions may cause the auxiliary bridging device 302 to bridge the incoming call or to forward the incoming call. For example, instructions may specify that: 1) all incoming PSTN calls, PSTN calls with specified CLIDs (or other PSTN identifier), or all PSTN calls except specified CLIDs (or other PSTN identifier) are to be forwarded to a specified PSTN telephone number or bridged to a specified packet data network address or specified handle (with local or tracking server address lookup) after ZZ rings (where ZZ is any number from zero upward) or with local confirmation only; and 2) all incoming packet data network calls, packet data network calls from specified handles or addresses, or all packet data network calls except those with specified handles or addresses are to be bridged to a specified PSTN telephone number or forwarded to a specified packet data network address or specified handle (with local or tracking server handle to address lookup) after ZZ rings (where ZZ is any number from zero upward) or with local confirmation only.

Any identified telephony bridging instructions may also be presented via a display of the auxiliary bridging device 302. For example, in response to a PSTN call received from a PSTN telephone 318, the auxiliary bridging device 302 identifies a telephony bridging instruction requiring that "all incoming PSTN calls are to be bridged to a handle of the auxiliary bridging device 302 with zero (0) rings". To carry out this instruction, the auxiliary bridging device 302 first retrieves the current network address of the telephone 316 from the tracking server 320. This retrieval may be done periodically in advance or in response to the incoming call. Alternatively, the telephone 316 may periodically deliver its current network address directly to the auxiliary bridging device 302. The auxiliary bridging device 302 uses the network address to attempt to establish the call with the telephone 316 (e.g., causing the telephone 316 to ring). Upon detecting pickup at the telephone 316, the auxiliary bridging device 302 begins a bi-directional bridging process to communicatively couple the telephones 316 and 318. In addition, the auxiliary bridging device 302 displays the bridging information and call status, e.g., connection-time, ringing, hang-up, etc., on its local display.

If instead of "after zero rings" the instruction required "with local confirmation only", before attempting to establish the call with the telephone 316, the auxiliary bridging device 302 would first begin to ring the POTS telephony device 306 locally and, upon local pickup, prompt (with local audible and visual interfaces) for confirmation/authorization for the bridging. If no pickup is detected or confirmation is otherwise not received, the instruction is not carried out. Instead, the incoming call could be answered locally or sent immediately to voice mail as preset or as the locally answering user commands.

Finally, if instead of "after zero rings" the instruction required "after 4 rings", the auxiliary bridging device 302 would begin to ring the POTS telephony device 306 locally. If pickup is detected during or before the 4^{th} ring, the auxiliary bridging device 302 would abort the instruction and deliver the call locally. If a "voicemail" instruction is entered locally before or during the 4^{th} ring, the call will be forwarded immediately to voice mail and the instruction will be aborted. If however, the 4 rings occur without user interaction, the auxiliary bridging device 302 will continue the instruction by causing the telephone 316 to provide the 5^{th} and further rings, and, upon pickup detect, will bridge the telephones 316 and 318.

The bridging functions of the auxiliary bridging device 302 may also be employed to access a remote PSTN message server 330 or remote packet data network message server 332. Typical telephony bridging instructions for bridging to obtain messages may cause all incoming PSTN calls, PSTN calls with specified CLIDs (or other PSTN identifier), or all PSTN calls except specified CLIDs (or other PSTN identifier) to be forwarded to a specified PSTN telephone number or bridged to a specified packet data network address or specified handle (with local or tracking server address lookup) after ZZ rings (where ZZ is any number from zero upward) or with local confirmation. Upon failure of bridging termination or local termination of the PSTN call, the PSTN call is bridged to a voice mail handle or specified network address associated with the message server 332, or forwarded to a voice mail telephone number associated with the message server 330 using local or PSTN infrastructure forwarding functionality.

Further, all incoming packet data network calls, packet data network calls from specified handles or addresses, or all packet data network calls except those with specified handles or addresses are bridged to a specified PSTN telephone number or forwarded to a specified packet data network address or specified handle (with local or tracking server handle to address lookup). After ZZ rings (where ZZ is any number from zero upward) or with local confirmation that terminal of the call has not occurred, the auxiliary bridging device 302 forwards the incoming packet data network call to a voice mail handle or specified network address associated with message server 332, or bridged to a voice mail telephone number associated with message server 330 using local bridging functionality.

In an alternate operation, auxiliary bridging device 302 receives an incoming VoIP telephony call. In response to the incoming VoIP telephony call, auxiliary bridging device 302 obtains telephony bridging instructions for the call. Such telephony bridging instructions may direct the auxiliary bridging device 302 to bridge the call to PSTN telephone 318 via PSTN 106. When bridging the incoming VoIP call the auxiliary bridging device 302 converts the call from a VoIP telephony format to a PSTN telephony format as part of the bridging function and bridges the incoming VoIP call to the PSTN terminal via a PSTN 106 connection to the PSTN terminal 318. As was the case with the incoming PSTN call, the auxiliary bridging device 302 may also choose to terminate the VoIP call to the coupled POTS telephony device 306 based upon the telephony bridging instructions. In such case, the auxiliary bridging device 302 provides a ring tone or other alert signal to the user via the POTS telephony device 306 and, upon the user's acceptance of the call, terminates the call to the POTS telephony device 306. Further, the telephony bridging instructions may cause the auxiliary bridging device 302 to deliver the VoIP telephony call to voice mail, either local voice mail or remote voice mail at a message server 330 or 332.

According to another operation of the present invention, the auxiliary bridging device 302 accesses tracking server 320 to obtain all or some of the telephony bridging instructions. With one of its operations, tracking server 302 tracks the whereabouts of particular terminals, each particular terminal respective to one or more users. When a call is incoming to auxiliary bridging device 302, the auxiliary bridging device 302 queries the tracking server 320 with a user identifier. This user identifier may simply be a handle that the user has established. The user identifier could also include the handle plus another component such as a VoIP telephony domain descriptor (service provider descriptor), a terminal handle, and/or a terminal port handle. Based on the user identifier received in the query by the tracking server 320 from auxiliary bridging device 302, the tracking server 320 provides a response to auxiliary bridging device 302. This response includes some or all of the telephony bridging instructions. The telephony bridging instructions may include a direction whether to bridge the call, a destination VoIP packet network address, a destination PSTN telephone number, and/or additional information.

In accessing the tracking server 320, the auxiliary bridging device 302 may send additional information with the query, such as a CLID of a PSTN call, a destination PSTN number of the PSTN call, a source packet data network address of a VoIP call, a destination packet data network address of the VoIP call, status information of the auxiliary bridging device 302, or additional information. In response, the tracking server 320 may provide telephony bridging instructions based upon this additional information sent to it by the auxiliary bridging device 302.

The telephony bridging instructions, locally obtained and/or obtained from tracking server 320, may differ based upon packet data network address(es) and/or PSTN number(s) associated with the incoming call. For example, an incoming PSTN call from PSTN telephone 318 may be bridged to VoIP terminal 314 while an incoming PSTN call from cell phone 316 may not be bridged to VoIP terminal 332, such different handling of the calls based upon the differing PSTN numbers of terminals 318 and cell phone 316. Likewise, bridging may be disabled for one of cell phone 316 or PSTN telephone 318.

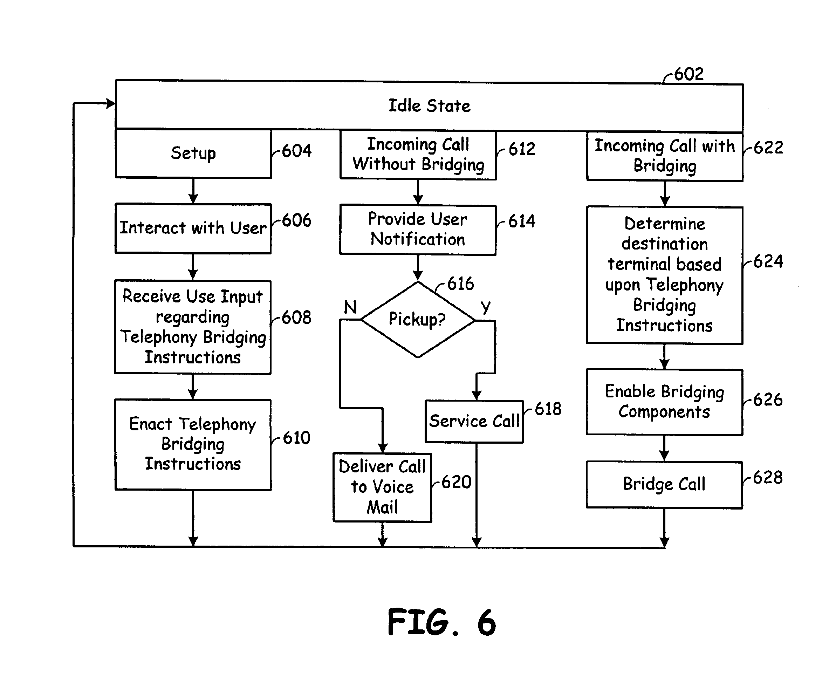

Bridging may be based upon a source packet data address, e.g., IP address of the source VoIP terminal or the destination IP address of the VoIP call. For example, an incoming VoIP telephone call originated from VoIP phone 314 may be bridged by auxiliary bridging device 302 to PSTN telephone 318 while an incoming VoIP call from VoIP telephone 312 may not be bridged; the determination of whether to bridge the incoming VoIP call based upon the packet data network address (IP address) of the calling VoIP terminal. Auxiliary bridging device 302 may be accessed via multiple packet data network addresses. When an incoming VoIP call is addressed to a first one of these packet data network addresses, auxiliary bridging device 302 may enable bridging. However, VoIP telephone calls directed toward another packet data network address of the auxiliary bridging device 302 may be denied bridging and sent to voice mail. Further details and description of these operations are described in more detail with reference to FIGs. 6 and 8-9.

According to another aspect of the present invention, the auxiliary bridging device 302 is operable to receive a PSTN call request (first call request) relating to an incoming call via the PSTN 106. The auxiliary bridging device 302 is then operable to create a VoIP call request (second call request) based upon the PSTN call request and to send the VoIP call request via the packet data network 104. Moreover, according to yet another aspect of the present invention, the auxiliary bridging device 302 is operable to receive a VoIP call request (first call request) relating to an incoming call via the packet data network 104. The auxiliary bridging device 302 is then operable to create a PSTN call request (second call request) based upon the VoIP call request and to send the PSTN call request via the PSTN 106. These call requests may result in bridging by the auxiliary bridging device 302, bridging by the service provider bridging device 324, or bridging by both the auxiliary bridging device 302 and the service provider bridging device 324.

For example, a first portion of a bridged call may be bridged by auxiliary bridging device 302 while a second portion of the call the bridged call may be bridged by the service provider bridging device 324. Such "shared bridging" may result in the auxiliary bridging device 302 performing half-duplex bridging and the service provider bridging device 324 performing half-duplex bridging. With a particular example, PSTN terminal 316 calls auxiliary bridging device 302 via cellular network 310 and PSTN 106. Based upon its telephony bridging instructions, the auxiliary bridging device 302 determines that bridging to VoIP terminal 314 is required. However, due to operating constraints, the auxiliary bridging device 302 determines that it will bridge incoming voice signals originating with the PSTN terminal 318 and destined for the VoIP terminal 314 while the service provider bridging device 324 will bridge voice signals originating from the VoIP terminal 314 and destined for the PSTN terminal 318. Of course, the auxiliary bridging device 302 could initiate full bridging by the service provider bridging device 324 as well.

FIG. 4 is a system diagram illustrating a telephony infrastructure that includes an auxiliary bridging device constructed and operating according to an embodiment of the present invention. FIG. 4 retains common numbering of same/similar elements with FIGs. 1, 2, and 3. Auxiliary bridging device 402 is a portable device that supports both PSTN telephony and VoIP telephony. In particular, auxiliary bridging device 402 supports wireless connections with the cellular network 110 for PSTN telephony operations. Further, auxiliary bridging device 402 supports a wireless connection to wireless access point 304 for packet switched operations, e.g., VoIP telephony that operates according to a WLAN or WPAN communication standard. Auxiliary bridging device 402 couples to POTS telephony device 406 via a wired or wireless connection.

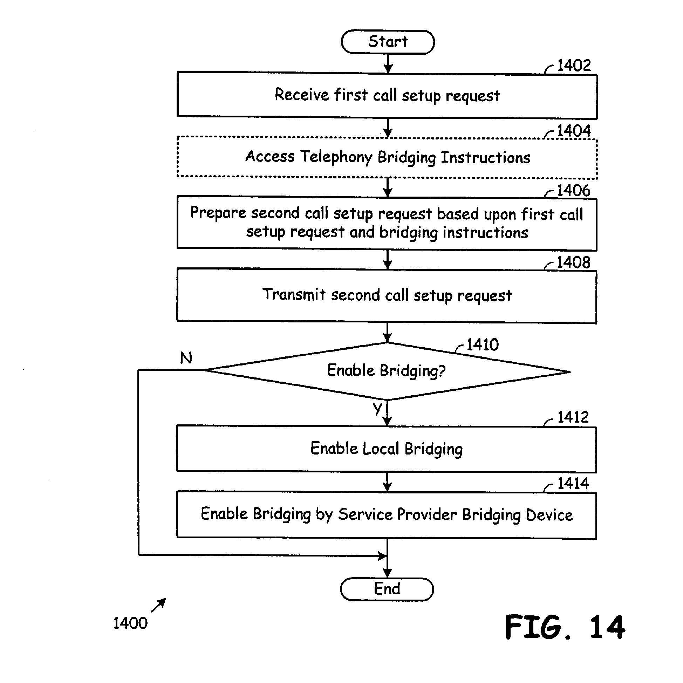

The auxiliary bridging device 402 includes bridging circuitry and supports call bridging setup and bridging operations according to the present invention. The bridging operations of auxiliary bridging device 402 are similar to or the same as the bridging operations previously described with reference to FIGs. 1-3 and that will be described further herein with reference to FIGs. 6 and 8-13. The auxiliary bridging device 402 supports call setup operations that were previously described with reference to other of the auxiliary bridging devices and that will be described further herein with reference to FIG. 14.

FIG. 5 is a block diagram illustrating an auxiliary bridging device constructed according to an embodiment of the present invention. The auxiliary bridging device 502 includes processing circuitry 504, memory 506, interface circuitry 508, a display 550, and a user interface 552. The processing circuitry 504 may be a single processing device or a plurality of processing devices. The processing circuitry 504 may be a microprocessor, micro-controller, digital signal processor, microcomputer, central processing unit, field programmable gate array, programmable logic device, state machine, logic circuitry, analog circuitry, digital circuitry, and/or any device that manipulates signals (analog and/or digital) based on hard coding of the circuitry and/or operational instructions. The memory 506 may be a single memory device, a plurality of memory devices, and/or embedded circuitry of the processing circuitry 504. The memory 506 may be a read-only memory, random access memory, volatile memory, non-volatile memory, static memory, dynamic memory, flash memory, cache memory, and/or any device that stores digital information. Note that when the processing circuitry 504 implements one or more of its functions via a state machine, analog circuitry, digital circuitry, and/or logic circuitry, the memory and/or memory element storing the corresponding operational instructions may be embedded within, or external to, the circuitry comprising the state machine, analog circuitry, digital circuitry, and/or logic circuitry. Further note that, the memory 506, and the processing circuitry 506 executes, hard coded and/or operational instructions corresponding to at least some of the steps and/or functions illustrated in Figures 1-15. The display 550 and user interface 552 support local interaction with the auxiliary bridging device 502 by a user. The display 550 may be employed to display current bridging activity of the auxiliary bridging device 502.

The interface circuitry 508 includes circuit switched interface circuitry 528, packet switched interface circuitry 532, POTS driver circuitry 538, and may include processing circuitry 540 and/or a host computer interface 542. The circuit switched interface circuitry 528 interfaces the auxiliary bridging device 502 to the PSTN via one or more wired and/or wireless links. The circuit switched interface circuitry 528 may include a wired link to the PSTN, a wireless link to the PSTN, a wireless link to a cellular network, a fiber optic link to the PSTN, or another circuit switched link. The packet switched interface circuitry 532 interfaces the auxiliary bridging device 502 to one or more packet switched networks, e.g., the Internet, one or more WANs, one or more LANs, etc., via one or more wired and/or wireless links. The packet switched interface circuitry 532 supports one or more wired packet switched interface standards including Ethernet, for example, and/or other one or more wireless interface standards including any of the IEEE 802.11x interface standards, the WiMAX operating standard, a Digital cable operating standards such as DOCSIS, a satellite communication operating standard, or other wireless interface standards.

The POTS driver circuitry 538 interfaces the auxiliary bridging device 502 to a POTS telephony device via either a wired or a wireless interface. The POTS driver circuitry 538 generates and delivers POTS signaling to the POTS telephony device. This POTS signaling is equivalent to POTS signaling provided by a Central Office of a PSTN telephone company over twisted pair wiring to a POTS telephone. Such POTS signaling may be provided over a twisted pair of copper conductors or via a wireless connection. In either case, the POTS driver circuitry 538 appears to the POTS telephony device that it is connected directly to a central office of the PSTN. The processing circuitry 504 and/or the processing circuitry 540 of the communication interface 508 is capable of bridging calls between every two of the POTS driver circuitry 538, the circuit switched interface circuitry 528, and the packet switched interface circuitry 532.

The host computer interface 542, when present, interfaces the auxiliary bridging device 502 to a host computer. The host computer interface 542 may be an expansion card interface, a serial interface, a parallel interface, a wireless interface, or another interface that supports communications between the auxiliary bridging device 502 and a host computer, .e.g., host computer 118 of FIG. 1.

The memory 506 stores software instructions that, when executed by processing circuitry 504 and/or 542, cause the auxiliary bridging device 502 to operate according to the present invention. Generally, these software instructions support functionality relating to local call processing with bridging override operations 510, bridging and billing software application operations 512, PSTN to Internet call setup operations 516, Internet to PSTN call setup operations 518, PSTN usage billing support operations 520, bridging exchange processing operations 524, and security/encryption processing operations 526. Referring particularly to the local call processing with bridging override instructions 510, upon execution, the processing circuitry 506 and/or 542 enables the auxiliary bridging device 502 to locally process calls to override bridging operations of the auxiliary bridging device 502. In its normal operations, the auxiliary bridging device 502 is available to bridge calls between its packet switched interface circuitry 532 and its circuitry switched interface circuitry 528. However, during such bridging operations, a local subscriber may desire to access the PSTN or the Internet via the POTS driver circuitry 538 and a coupled POTS telephony device that would interrupt or compromise the currently bridged call. The local call processing with bridging override functionality 510 establishes rules that allow the user to access and disrupt a currently bridged call or not depending upon the particular rules established. With the particular operation, a local subscriber (user of POTS telephony device) may always interrupt a currently bridged call, sometimes interrupt a currently bridged call, or never interrupt a currently bridged call. The ability of a local subscriber/user to interrupt a locally bridged call may be based upon access rules that are obtained from a remote location or locally stored.

The bridging and billing software application 512 encompasses each of remote user/device service permissions 514, the PSTN to Internet call setup operations 516, the Internet to PSTN call setup operations 518, the PSTN usage billing support operations 520, the bridging exchange processing operations 524, and the security/encryption processing operations 526. In particular, the remote user/device service permissions operations 514 allow the auxiliary bridging device 502 to determine whether a remote user or a remote device may use the auxiliary bridging device 502 for call bridging operations. In such case, when bridging is allowed, these operations 514 allow local, national, and international connections. In other cases, a subset of local, national, and international connections allowed are none of the above, depending upon the permissions of the remote user or remote device.

The PSTN to Internet call setup operations 516 support another PSTN device coupled to the auxiliary bridging device 502 to setup an Internet call from a calling PSTN terminal. In such case, the PSTN to Internet call setup functions 516 provide audio caller ID functions, touch tone voice mail vectoring operations, or other interface operations that allow a user of a remote PSTN telephone to interact with the auxiliary bridging device 502. Based upon the communications supported by the PSTN to Internet call setup functionality 516, the remote PSTN user may setup the auxiliary bridging device 502 for call bridging operations.

The Internet to PSTN call setup operations 518 allow a remote VoIP terminal itself to setup call bridging by the auxiliary bridging device 502. This functionality may be via a web page interface, a simpler data communication interface that causes exchanges sufficient information to enable the Internet to PSTN call setup to occur, or via another interface.

The PSTN usage and billing support operations 520 allow the auxiliary bridging device 502 to determine PSTN usage by a non-local subscriber for future billing operations. The PSTN usage billing support operations 520 may interface the auxiliary bridging device 502 with the billing management software of a service provider server 320. For example, if the auxiliary bridging device 502 performs call bridging for a remote VoIP or PSTN terminal, the call may be bridged not only to a local PSTN telephone but also to a non-local PSTN telephone wherein additional PSTN tolls are incurred. Any usage of the PSTN while servicing a bridged telephone call may result in PSTN billing to the auxiliary bridging device 502. The PSTN usage billing support functionality 520 supports capturing of such PSTN usage by the auxiliary bridging device 502 and subsequent interaction with a server or with another device to cause PSTN usage billing to the appropriate remote subscriber or terminal.

The bridging exchange processing functionality 524 causes the auxiliary bridging device 502 to track usage of remote subscribers for call bridging operations and to track usage of a local subscriber of remote auxiliary bridging devices. This functionality may operation in conjunction with a bartering system that tracks usage of various subscribers to the bartering system. In such case, these operations may ensure that usage of auxiliary bridging devices by differing subscribers is equitable. If the operations are not equitable, the bridging exchange processing operations may cause notification or bills to be sent to a subscriber that uses more than an equitable amount or number of call bridging operations.

The security/encryption processing operations 526 of the auxiliary bridging device 502 are enacted to: (1) preclude a local user from listening in on bridged calls, and (2) to preclude remote users from listening on communications of a local user of the auxiliary bridging device 502. Security/encryption processing operations 526 may actually mask or encrypt data communications to preclude the coupled POTS telephony device from eavesdropping on communications that are bridged.

FIG. 6 is a flow chart illustrating operation of an auxiliary bridging device according to an embodiment of the present invention. In an idle state 602, the auxiliary bridging device 102 performs normal operations, including waiting for particular activity according to embodiment(s) of the present invention.

A first operation according to the present invention includes setup (Step 604) of telephony bridging instructions that will later be used by the auxiliary bridging device 102. Manners of initiating setup include, keypad interface input, web page interface interaction with the auxiliary bridging device 102, voice recognition operations of the auxiliary bridging device 102, or another setup initiation type. The auxiliary bridging device 102 then interacts with the user via either the user interface (keypad, display, voice recognition, etc.) or a web page (Step 606). The auxiliary bridging device 102 then receives user input regarding the telephony bridging instructions from the user (Step 608) and, based upon this user input, enacts telephony bridging instructions for subsequent use in processing calls (Step 610).

Another operation according to the present invention occurs when the auxiliary bridging device 102 receives an incoming call and determines that bridging will not be performed (Step 612). The incoming call may be a PSTN call or a VoIP call. As was previously described, upon receipt of a call, processing circuitry of the auxiliary bridging device 102 obtains telephony bridging instructions and determines whether bridging is be performed for the particular call. If the incoming call is not to be bridged, the auxiliary bridging device 102 provides a user notification via a ring tone or another announcement (Step 614). If the user picks up the call (as determined at Step 616), the auxiliary bridging device 102 services the call to a completion (Step 618). However, if the user does not pickup the call (as determined at Step 616), the auxiliary bridging device 102 delivers the call to voice mail (Step 620). As the reader will appreciate, some incoming calls may be sent directly to voice mail without notification to the user of the incoming call. Further, some calls that are not picked up by a user will simply be terminated after a certain number of rings or ringing will continue until the calling party decides to hang up.

As a further operation according to the present invention, the telephony bridging instructions for the call indicates that the incoming call is to be bridged (Step 622). The auxiliary bridging device 102 determines a destination terminal to which the call is to be bridged based upon the telephony bridging instructions (Step 624). The auxiliary bridging device 102 then enables its components to support the bridging operations (Step 626). When the call is bridged between the PSTN and the packet data network, both the PSTN interface and the packet data network interface are enabled to support bridging of the call. When the auxiliary bridging device 102 simply bridges a VoIP call to an alternate destination terminal, only the packet data network interface need be enabled for such bridging. The call is then bridged based upon the telephony bridging instructions using the enabled auxiliary bridging device 102 components (Step 628). Such bridging is continued until one or both parties discontinue the call or until another event occurs that requires disruption of the call bridging. From Steps 610, 620, 618, and 628, operation returns to the idle state (Step 602).

According to another embodiment, an auxiliary bridging device 102 operates in conjunction with a telephony infrastructure to support a call between a first telephony device and a second telephony device. The auxiliary bridging device 102 has a first interface and a second interface, the first interface coupled to the PSTN, the second interface coupled to an Internet network. The auxiliary bridging device 102 receives first voice signals in a first format generated by the first telephony device via the first interface and receives second voice signals in a second format generated by the second telephony device via the second interface. The auxiliary bridging device 102 translates the first voice signals received from the first format to the second format and translates the second voice signals received from the second format to the first format. Finally, the auxiliary bridging device 102 delivers the first voice signals in the second format to the second telephony device via the second interface and delivers the second voice signals in the first format to the first telephony device.

Translating the first voice signals and second voice signals together may include bridging the call between the PSTN and the Internet network. The first format may be an analog format while such as a PSTN format or a cellular format. The second format may be defined pursuant to a voice over the Internet network protocol.

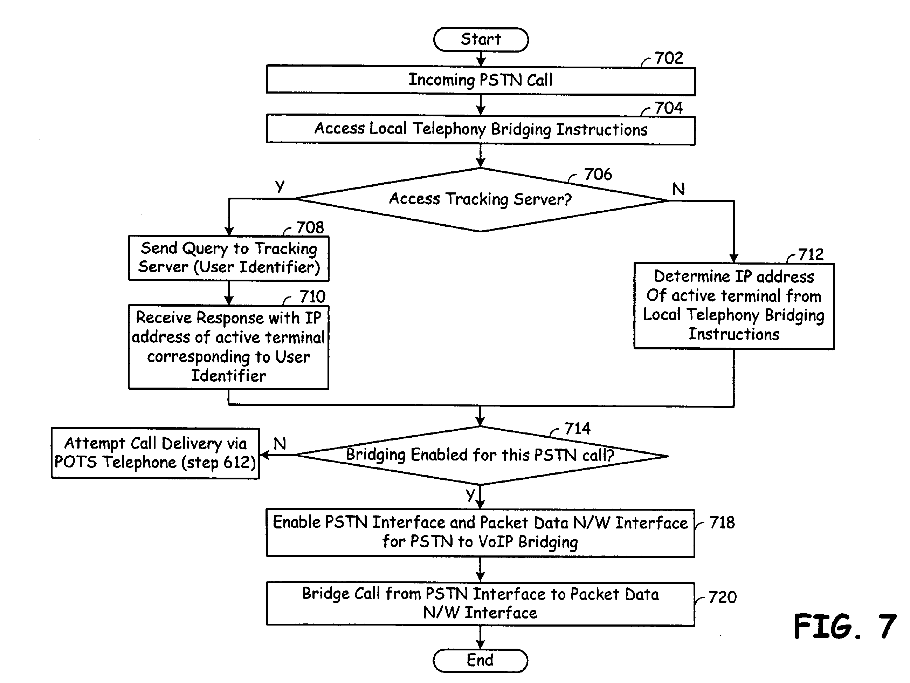

FIG. 7 is a flow chart illustrating PSTN to VoIP bridging operations of an auxiliary bridging device in accordance with an embodiment of the present invention. Operation commences with auxiliary bridging device 102 determining that a PSTN call is incoming (Step 702). The auxiliary bridging device 102 then accesses locally stored telephony bridging instructions (Step 704). In accessing the locally stored telephony bridging instructions, the auxiliary bridging device 102 may determine that tracking server 320 access is required (Step 706). Access of the tracking server 320 may be required based upon the CLID of the PSTN call, the destination PSTN telephone number, a time of day, or upon other factors.

When access of the tracking server 320 is required (Step 706), the auxiliary bridging device 102 sends a query to the tracking server 320 that includes a user identifier (Step 708). This user identifier corresponds to a user of the auxiliary bridging device 102, to the auxiliary bridging device 102, or another particular user identifier. The user identifier may include simply the handle of the user, a service provider identifier, a device identifier associated with the incoming call, and/or an incoming device port associated with the incoming PSTN call. The auxiliary bridging device 102 then receives a response from the tracking server 320 that includes a packet data network address (IP address) of an active terminal corresponding to the user identifier (Step 710). Further included with the response may be a particular device identifier and/or a port number to be used in the bridging operations. When access to the tracking server is not required (as determined at Step 706), the auxiliary bridging device 102 uses the local bridging information to determine an IP address of an active terminal for bridging operations (Step 712). Further bridging information, e.g., device identifier, port number, etc. may also be determined locally.

The auxiliary bridging device 102 may determine, based upon the local telephony bridging information or the response received from the tracking server 320 that bridging is not enabled for this PSTN call (Step 714). When bridging is not enabled for the PSTN call, the auxiliary bridging device 102 need not obtain an IP address at Steps 710 or 712, although this information may be returned/obtained as a default operation. During some times or for some operating conditions, PSTN to VoIP bridging is not enabled. Alternatively, PSTN to VoIP bridging may be selectively enabled based upon a destination PSTN number (associated with the auxiliary bridging device 102), a calling line ID (CLID) for the incoming PSTN call, a time of day, a day of the week, when a user of the auxiliary bridging device 102 is present at the locale of the phone but busy, etc. When bridging is not enabled for the PSTN call, the auxiliary bridging device 102 attempts call delivery locally to the coupled POTS telephony device step 612 of FIG. 6.

When bridging is enabled for the PSTN call, the auxiliary bridging device 102 enables its PSTN interface and its packet data network interface to service the PSTN to VoIP bridging (Step 718). The auxiliary bridging device 102 then bridges the call from the PSTN interface to the packet data network interface (Step 720). The PSTN to VoIP bridging is performed until the call is completed, until intervening events occur, or for a particular duration of time. Alternately, the auxiliary bridging device 102 bridges the call in cooperation with a service provider bridging device 124.

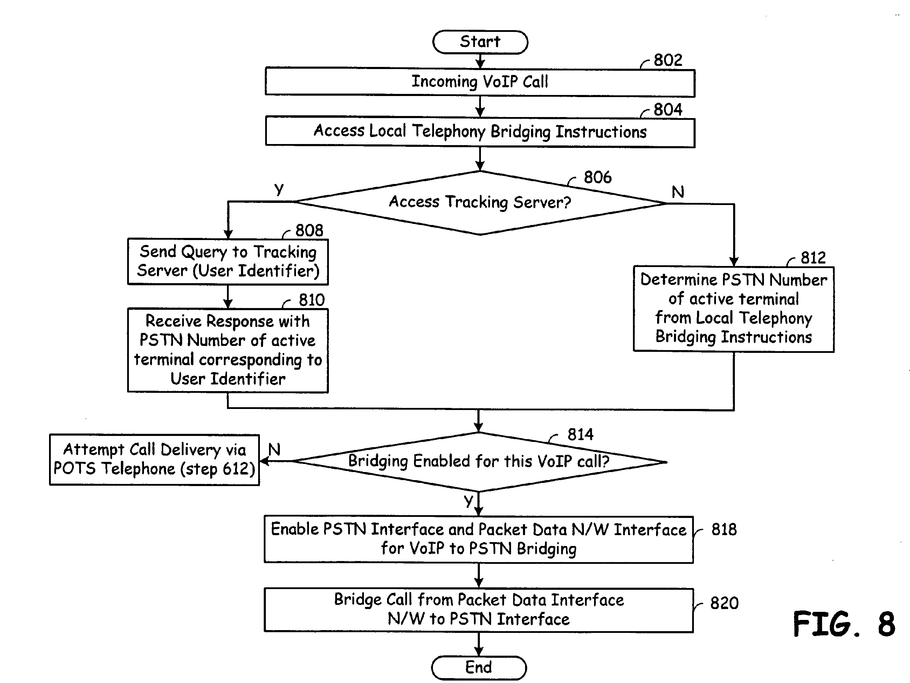

FIG. 8 is a flow chart illustrating VoIP to PSTN bridging operations of an auxiliary bridging device in accordance with an embodiment of the present invention. Operation commences with the auxiliary bridging device 102 determining that a VoIP call is incoming (Step 802). The auxiliary bridging device 102 then accesses locally stored telephony bridging instructions (Step 804). In accessing the locally stored telephony bridging instructions, the auxiliary bridging device 102 may determine that tracking server access is required (Step 806). Access of the tracking server 320 may be required based upon the source address of the VoIP call, the destination address of the VoIP call, a time of day, or upon other factors.

When access of the tracking server 320 is required (Step 806), the auxiliary bridging device 102 sends a query to the tracking server 320 that includes a user identifier (Step 808). This user identifier corresponds to a user of the auxiliary bridging device 102, to the auxiliary bridging device 102, or another particular user identifier. The user identifier may include simply the handle of the user, a service provider identifier, a device identifier associated with the incoming call, and/or an incoming device port associated with the incoming VoIP call. The auxiliary bridging device 102 then receives a response from the tracking server 320 that includes a PSTN number of an active terminal corresponding to the user identifier (Step 810). When access to the tracking server is not required (as determined at Step 806), the auxiliary bridging device 102 uses the local bridging information to determine a PSTN number of an active terminal for bridging operations (Step 812).

The auxiliary bridging device 102 may determine, based upon the local telephony bridging information or the response received from the tracking server 320 that bridging is not enabled for this VoIP call (Step 814). When bridging is not enabled for the VoIP call, the auxiliary bridging device 102 need not obtain a PSTN number at Steps 810 or 812, although this information may be returned/obtained as a default operation. During some times or for some operating conditions, VoIP to PSTN bridging is not enabled. Alternatively, VoIP to PSTN bridging may be selectively enabled based upon a destination address of the incoming VoIP call, a source address of the VoIP call, a time of day, a day of the week, when a user of the auxiliary bridging device 102 is present at the locale of the phone but busy, etc. When bridging is not enabled for the VoIP call, the auxiliary bridging device 102 attempts call delivery locally to the coupled POTS telephony device, e.g., Step 612 of FIG. 6.

When bridging is enabled for the VoIP call, the auxiliary bridging device 102 enables its PSTN interface and its packet data network interface to service the VoIP to PSTN bridging (Step 818). The auxiliary bridging device 102 then bridges the call from the VoIP interface to the packet data network interface (Step 820). VoIP to PSTN bridging is performed until the call is completed, until intervening events occur, or for a particular duration of time.

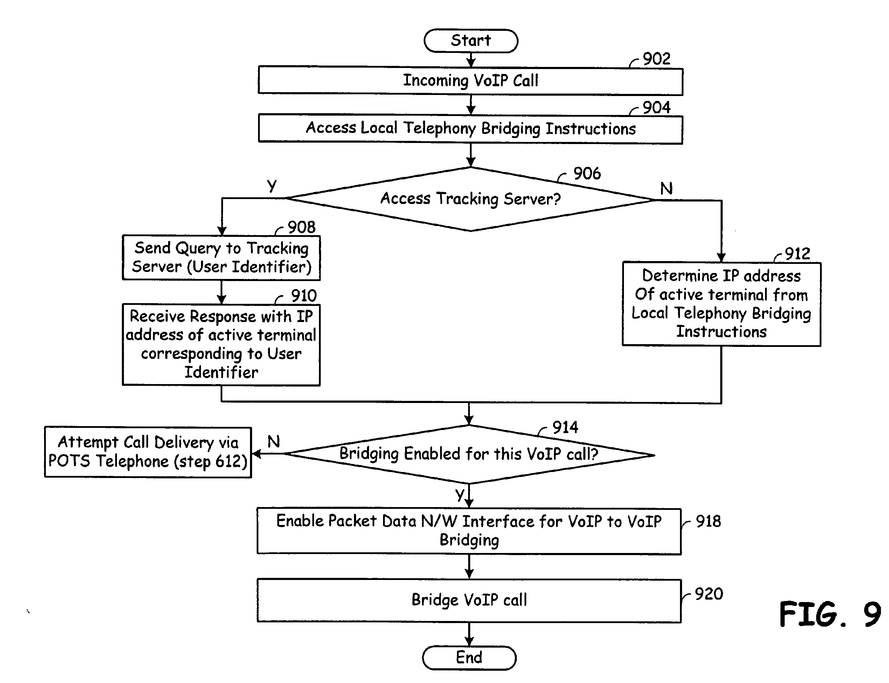

FIG. 9 is a flow chart illustrating VoIP to VoIP bridging operations of an auxiliary bridging device in accordance with an embodiment of the present invention. Operation commences with auxiliary bridging device 102 determining that a VoIP call is incoming (Step 902). The auxiliary bridging device 102 then accesses locally stored telephony bridging instructions (Step 904). In accessing the locally stored telephony bridging instructions, the auxiliary bridging device 102 may determine that tracking server access is required (Step 906). Access of the tracking server 90 may be required based upon the source address of the VoIP call, the destination address of the VoIP call, a time of day, or upon other factors.

When access of the tracking server is required (Step 906), the auxiliary bridging device 102 sends a query to the tracking server 320 that includes a user identifier (Step 908). This user identifier corresponds to a user of the auxiliary bridging device 102, to the auxiliary bridging device 102, or another particular user identifier. The user identifier may include simply the handle of the user, a service provider identifier, a device identifier associated with the incoming call, and/or an incoming device port associated with the incoming VoIP call. The auxiliary bridging device 102 then receives a response from the tracking server that includes a packet data network address, e.g., IP address, of an active terminal corresponding to the user identifier (Step 910). When access to the tracking server is not required (as determined at Step 906), the auxiliary bridging device 102 uses the local bridging information to determine an IP address of an active terminal for bridging operations (Step 912).

The auxiliary bridging device 102 may determine, based upon the local telephony bridging information or the response received from the tracking server 320 that bridging is not enabled for this VoIP call (Step 914). When bridging is not enabled for the VoIP call, the auxiliary bridging device 102 need not obtain a VoIP address for bridging at Steps 910 or 912, although this information may be returned/obtained as a default operation. During some times or for some operating conditions, VoIP to VoIP bridging is not enabled. Alternatively, VoIP to VoIP bridging may be selectively enabled based upon a destination address of the incoming VoIP call, a source address of the VoIP call, a time of day, a day of the week, when a user of the auxiliary bridging device 102 is present at the locale of the phone but busy, etc. When bridging is not enabled for the VoIP call, the auxiliary bridging device 102 attempts call delivery locally to the coupled POTS telephony device, e.g., Step 612 of FIG. 6.

With bridging is enabled for the VoIP call, the auxiliary bridging device 102 enables its VoIP interface to service the VoIP to VoIP bridging (Step 918). The auxiliary bridging device 102 then bridges the call using the VoIP interface (Step 920). The VoIP to VoIP bridging is performed until the call is completed, until intervening events occur, or for a particular duration of time.

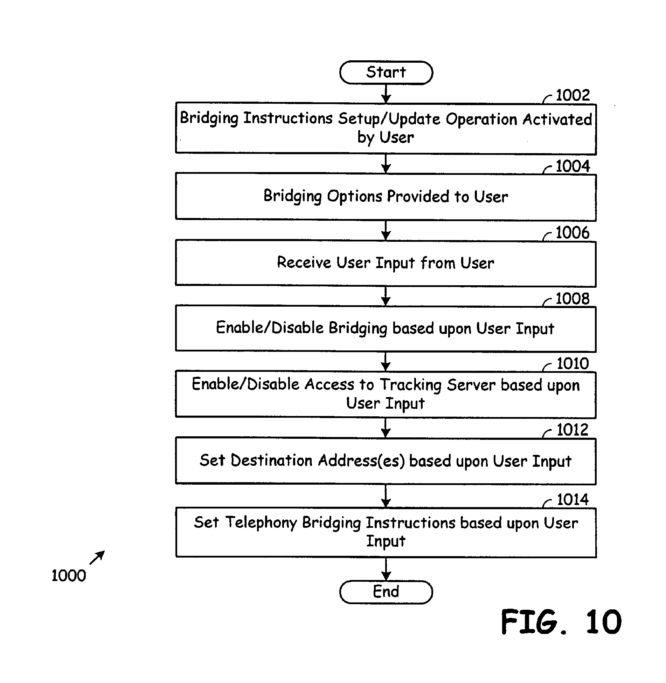

FIG. 10 is a flow chart illustrating bridging setup operations of an auxiliary bridging device in accordance with an embodiment of the present invention. Operation 1000 of FIG. 10 commences with initiation of telephony bridging instruction setup/update by a user (Step 1002). Setup may be initiated locally via a user interface or remotely via a web page interface and remote terminal.

After activation of the telephony bridging instructions setup/update, the processing circuitry of the auxiliary bridging device 102 provides telephony bridging setup/update options to the user (Step 1004). Options may include options to enable/disable bridging, whether to access remote the tracking server for additional telephony bridging instructions, to set one or more destination addresses for bridging, to set particular rules for bridging, and other options for setting/altering the telephony bridging instructions. For example, bridging may be enabled or disabled based upon a particular source IP address, a particular calling line ID, a particular destination IP address, a particular destination PSTN number, or another identifier associated with an incoming call. In setting the telephony bridging instructions, bridging may be selectively enabled or disabled for particular times of the day, for particular days of the week, and/or for days of the month, for example

In response to providing the options to the user, the processing circuitry of the auxiliary bridging device 102 receives user input (Step 1006). Based upon the user input, the processing circuitry of the auxiliary bridging device 102 selectively enables/disables bridging (Step 1008). Further, the processing circuitry of the auxiliary bridging device 102 selectively enables/disables access to the tracking server based upon the user input (Step 1010). For example, access to the tracking server may be enabled during particular times of day, days of week, telephone status, etc. Based upon the user input, the processing circuitry may also set one or more destination addresses for call bridging (Step 1012). As an example of the operation of Steps 1010 and 1012, a user enables call bridging to a cell phone and selects the PSTN telephone number of the cell phone. The user could also enter a destination IP addresses for call bridging operations. Based upon all the user inputs, the processing circuitry of the auxiliary bridging device 102 sets the telephony bridging instructions (Step 1014). From Step 1014, operation ends.

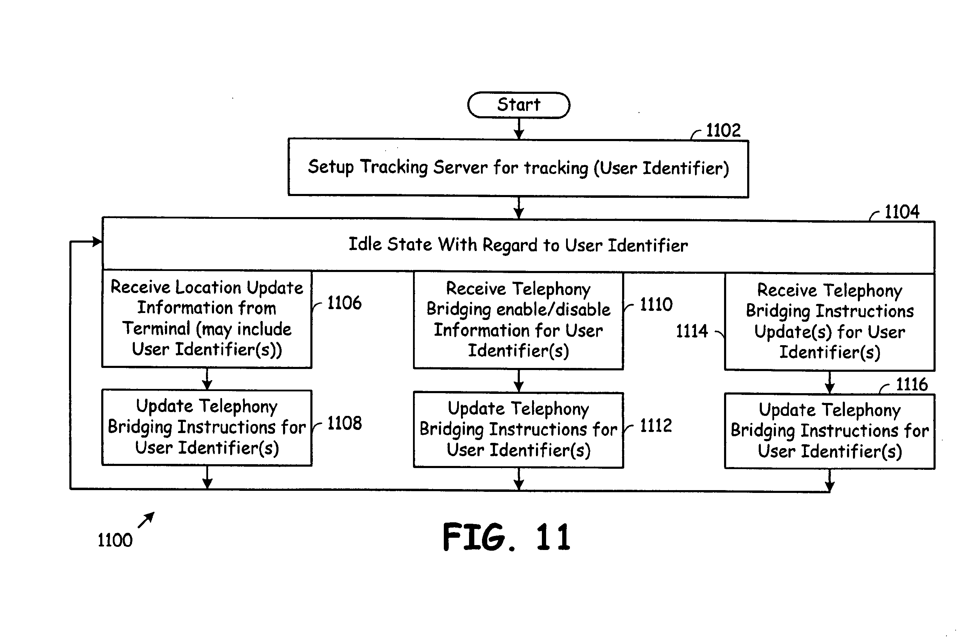

FIG. 11 is a flow chart illustrating tracking server setup/update operations in accordance with an embodiment of the present invention. Operation 1100 commences with the initial setup of the tracking server for the tracking of a user corresponding to one or more particular user identifiers (Step 1102). The user identifier may include simply the handle of a user, i.e., user ID, the handle of a particular user plus a service provider ID handle, both of these plus a device handle, and/or all of these plus a port handle. Thus, a number of differing options may be employed in identifying a particular user based upon a user identifier. Referring to both FIGs. 3 and 11, access of the tracking server 320 may be via an auxiliary bridging device 302, a remotely located computer 322, or via another terminal.

Once setup operations are complete, operation proceeds to the idle state (Step 1104). From the idle state, the tracking server may receive location update information corresponding to one or more particular user identifiers (Step 1106). The location update information may include a terminal registration that relates a particular terminal identified by a MAC address to a particular user ID. Location update information may also provide a particular IP address of a terminal associated with a particular user ID or MAC address. For example, after sending an initial message that relates its MAC address to a particular user ID, a VoIP terminal 312 attaches to and is assigned an IP address by the packet data network 308. Upon assignment of the IP address, the VoIP terminal 312 sends a message to tracking server 320 that includes its identity, e.g., handle or MAC address, and the newly assigned IP address. Upon receipt of the updated location information, the tracking server 320 updates the telephony bridging instructions for the affected user identifier(s) (Step 1108).

Any particular terminal (VoIP or PSTN) may be associated with one or more user identifiers. While traveling, for example, two or more persons traveling together may designate one particular terminal or one set of terminals for telephony bridging from their separate telephones 102. During initial setup, the user(s) associate this terminal or set of terminals with multiple user identifiers. After setup, when one of these designated terminals updates its location information with the tracking server 320, telephony bridging instructions are updated for each of the affected user identifiers and, therefore, for each affected auxiliary bridging device 102 that supports bridging for such users

From the idle state (Step 1104), the tracking server 320 may receive bridging enable/disable/update information for one or more particular user identifiers (Step 1110). A user or owner of an auxiliary bridging device 102 operating according to the present invention may selectively enable or disable bridging at any time via interaction with the tracking server 320. Based upon the information received, telephony bridging is enabled or disabled for one or more affected user identifiers (Step 1112).

After initial setup at Step 1104, a user may update telephony bridging information via interaction with the tracking server (Step 1114). Via interaction with the tracking server, a user may associate a new/different terminal for telephony bridging, may remove a terminal for telephony bridging, may associate another/other telephone(s) with his/her user identifier, may disassociate a telephone with his/her user identifier, among other alterations. In response to the user input, the tracking server 320 updates telephony bridging instructions for the particular user identifier (Step 1116). From each of Steps 1108, 1112, and 1116, operation returns to the idle state of Step 1104.

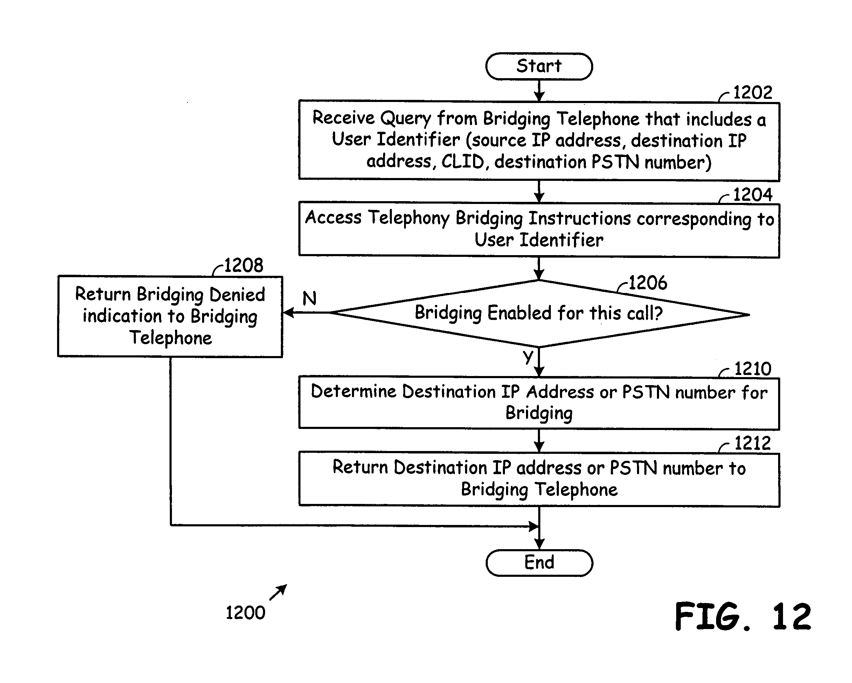

FIG. 12 is a flow chart illustrating tracking server access operations in accordance with an embodiment of the present invention. Operation commences with the tracking server 320 receiving a query from an auxiliary bridging device 302, the query including one or more user identifiers (Step 1202). The user identifier includes a user handle and may include one or more of a service provider ID, a device handle, and a port handle. Further, the query may include a source IP address, a destination IP address, a calling line ID, and/or a destination PSTN number of a call that is incoming to the auxiliary bridging device 302. In response to this query, the tracking server 320 accesses telephony bridging instructions corresponding to the user identifier or identifiers received in the query (Step 1204). The tracking server then determines whether bridging is enabled for this particular call (Step 1206). As was previously described, bridging may be enabled or disabled for all incoming calls, selectively enabled/disabled based upon the type of incoming call, i.e., PSTN call or VoIP call, or may be selectively enabled/disabled based upon the additional information received with the query. When bridging is not enabled for the particular call, the tracking server 320 returns a bridging denied indication to the auxiliary bridging device 302 (Step 1208). In response to this bridging denied query, the auxiliary bridging device 302 will either locally terminate the call or deliver the call to voicemail.

When the tracking server determines that bridging is enabled for the particular call, the tracking server 320 determines a destination IP address or PSTN number for bridging of the call (Step 1210). The tracking server 320 then returns to this destination IP address or PSTN number to the auxiliary bridging device 302 (Step 1212). From both Steps 1208 and 1210 operation ends.

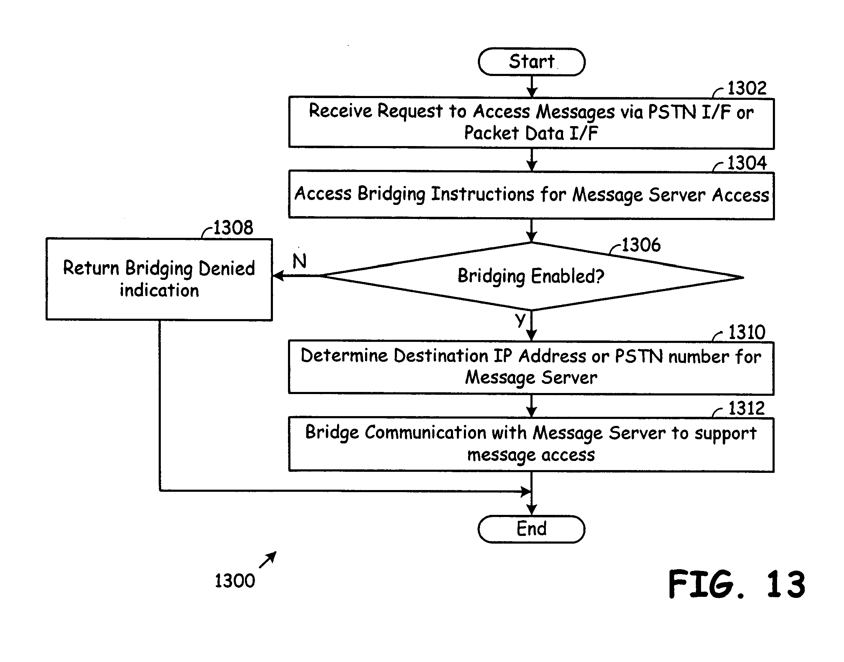

FIG. 13 is a flow chart illustrating message server bridging operations in accordance with an embodiment of the present invention. Operations 1300 of FIG. 13 occur when an auxiliary bridging device 302 receives a request to access messages, e.g., voice mail, via the PSTN interface or the packet data network interface of the auxiliary bridging device 302 (Step 1302). Such request may arrive as a typical incoming call that is routed to voice mail based upon telephony bridging instructions or as a specific request to access messages. For example, the auxiliary bridging device 302 may be setup with a particular PSTN number or IP address that is used only to access messages.

Upon receipt of the call, the auxiliary bridging device 302 accesses its telephony bridging instructions locally and/or remotely (Step 1304). The auxiliary bridging device 302 then determines whether bridging is enabled for this particular incoming call or message access request (Step 1306). If bridging is not enabled, a return bridging denied indication is provided to the calling terminal (Step 1308). If bridging is enabled for this particular incoming call, the auxiliary bridging device 302 determines a destination IP (message server 132) or destination PSTN number (message server 130) (Step 1310). The auxiliary bridging device 302 then bridges the call to the message server 330 or 332 to service the message access operations.

FIG. 14 is a flow chart illustrating call setup operations in accordance with an embodiment of the present invention. Operation 1400 commences with an auxiliary bridging device, e.g., 302, receiving a first call setup request (Step 1402). This call setup request may be received from the PSTN 106 or the packet data network 104. In response to the receipt of the first call setup request, the auxiliary bridging device 302 optionally accesses telephony bridging instructions (Step 1404). The telephony bridging instructions may be retrieved from one or more of local memory, a user interface, with the first call setup request, from a tracking server, from a remote computer, otherwise. The auxiliary bridging device 302 then selectively prepares a second call setup request based upon the first call setup request (Step 1406). In preparing the second call setup request, the auxiliary bridging device 302 may use the retrieved telephony bridging instructions. The auxiliary bridging device 302 then transmits the second call setup request to the Internet via packet data network 104 or 108 or to the PSTN 106, depending upon the operation (Step 1408).

The auxiliary bridging device 302 then determines whether to enable bridging for a call associated with the first call setup request (Step 1410). If telephony bridging is not enabled for the call, operation ends. However, if telephony bridging is enabled for the call the auxiliary bridging device 302 selectively bridges an incoming call relating to the first call setup request. The bridging may be performed locally by the auxiliary bridging device 302 (Step 1412) and/or remotely via a service provider bridging device 124 (Step 1414). Further, in selectively preparing the second call setup request based upon the first call setup request at Step 1406, the auxiliary bridging device 302 may employ a called PSTN number, a calling line identifier (CLID) number, a source IP address, and/or a destination IP address relating to the first call setup request.

As may be used herein, the terms "substantially" and "approximately" provides an industry-accepted tolerance for its corresponding term and/or relativity between items. Such an industry-accepted tolerance ranges from less than one percent to fifty percent and corresponds to, but is not limited to, component values, integrated circuit process variations, temperature variations, rise and fall times, and/or thermal noise. Such relativity between items ranges from a difference of a few percent to magnitude differences. As may also be used herein, the term(s) "coupled to" and/or "coupling" and/or includes direct coupling between items and/or indirect coupling between items via an intervening item (e.g., an item includes, but is not limited to, a component, an element, a circuit, and/or a module) where, for indirect coupling, the intervening item does not modify the information of a signal but may adjust its current level, voltage level, and/or power level. As may further be used herein, inferred coupling (i.e., where one element is coupled to another element by inference) includes direct and indirect coupling between two items in the same manner as "coupled to". As may even further be used herein, the term "operable to" indicates that an item includes one or more of power connections, input(s), output(s), etc., to perform one or more its corresponding functions and may further include inferred coupling to one or more other items. As may still further be used herein, the term "associated with", includes direct and/or indirect coupling of separate items and/or one item being embedded within another item. As may be used herein, the term "compares favorably", indicates that a comparison between two or more items, signals, etc., provides a desired relationship. For example, when the desired relationship is that signal 1 has a greater magnitude than signal 2, a favorable comparison may be achieved when the magnitude of signal 1 is greater than that of signal 2 or when the magnitude of signal 2 is less than that of signal 1.

The present invention has also been described above with the aid of method steps illustrating the performance of specified functions and relationships thereof. The boundaries and sequence of these functional building blocks and method steps have been arbitrarily defined herein for convenience of description. Alternate boundaries and sequences can be defined so long as the specified functions and relationships are appropriately performed. Any such alternate boundaries or sequences are thus within the scope and spirit of the claimed invention.

The present invention has been described above with the aid of functional building blocks illustrating the performance of certain significant functions. The boundaries of these functional building blocks have been arbitrarily defined for convenience of description. Alternate boundaries could be defined as long as the certain significant functions are appropriately performed. Similarly, flow diagram blocks may also have been arbitrarily defined herein to illustrate certain significant functionality. To the extent used, the flow diagram block boundaries and sequence could have been defined otherwise and still perform the certain significant functionality. Such alternate definitions of both functional building blocks and flow diagram blocks and sequences are thus within the scope and spirit of the claimed invention. One of average skill in the art will also recognize that the functional building blocks, and other illustrative blocks, modules and components herein, can be implemented as illustrated or by discrete components, application specific integrated circuits, processors executing appropriate software and the like or any combination thereof.

Moreover, although described in detail for purposes of clarity and understanding by way of the aforementioned embodiments, the present invention is not limited to such embodiments. It will be obvious to one of average skill in the art that various changes and modifications may be practiced within the spirit and scope of the invention, as limited only by the scope of the appended claims.

## Claims

1. An auxiliary bridging device used in a telephony infrastructure, the telephony infrastructure having a (Plain Old Telephone Service) POTS telephony device, a circuit switched telephony network, and a packet switched telephony network, the auxiliary bridging device comprising:
POTS driver circuitry that generates and delivers POTS signaling to the POTS telephony device;
packet switched interface circuitry that supports a call pathway to the packet switched telephony network;
circuit switched interface circuitry that supports a call pathway to the circuit switched telephony network;
processing circuitry coupled to the POTS driver circuitry, the circuit switched interface circuitry, and the packet switched interface circuitry; and
the processing circuitry operable to bridge calls between every two of the POTS driver circuitry, the circuit switched interface circuitry, and the packet switched interface circuitry.

2. The auxiliary bridging device of claim 1, wherein the POTS signaling is equivalent to POTS signaling provided by a Central Office of a PSTN telephone company over twisted pair wiring to a POTS telephone.

3. The auxiliary bridging device of claim 1, wherein in the processing circuitry operable to bridge calls between every two of the POTS driver circuitry, the circuit switched interface circuitry, and the packet switched interface circuitry, the processing circuitry is operable to bridge calls:
between the POTS driver circuitry and the packet switched interface circuitry;
between the POTS driver circuitry and the circuit switched interface circuitry; and
between the circuit switched interface circuitry and the packet switched interface circuitry.

4. Auxiliary bridging circuitry used in telephony infrastructure, the telephony infrastructure having a POTS (Plain Old Telephone Service) telephony device and a packet switched telephony network, the auxiliary bridging circuitry comprising:
POTS driver circuitry, coupled to the POTS telephony device, that detects an absence of POTS signaling, and the POTS driver circuitry responds to the detected absence by generating and delivering substitute POTS signaling to the POTS telephony device;
packet switched interface circuitry that supports a first pathway to the packet switched telephony network;
processing circuitry coupled to the POTS driver circuitry and the packet switched interface circuitry; and
the processing circuitry operable to selectively bridge calls between the POTS driver circuitry and the packet switched interface circuitry.

5. The auxiliary bridging circuitry of claim 4, wherein the substitute POTS signaling is equivalent to POTS signaling provided by a Central Office of a PSTN telephone company over twisted pair wiring to a POTS telephone.

6. The auxiliary bridging circuitry of claim 4, wherein the packet switched interface circuitry comprises a personal computer bus interface.

7. An auxiliary bridging device used in a telephony infrastructure, the telephony infrastructure supporting a (Plain Old Telephone Service) POTS telephony device and a personal computing device, the auxiliary bridging device comprising:
POTS driver circuitry that generates and delivers POTS signaling to the POTS telephony device;
interface circuitry coupled to the personal computing device;
processing circuitry coupled to the POTS driver circuitry and the interface circuitry; and
the processing circuitry operable to selectively bridge calls between the POTS driver circuitry and the personal computing device.

8. A telephony infrastructure supporting a packet switched telephony device, a first circuit switched telephony device, and a second circuit switched telephony device, the telephony infrastructure comprising:
a circuit switched telephony network coupled to the first circuit switched telephony device;
a packet switched telephony network coupled to the packet switched telephony device;
auxiliary bridging circuitry that generates and delivers (Plain Old Telephone Service) POTS signaling to the second circuit switched telephony device; and
the auxiliary bridging circuitry operable to selectively bridge calls between the second circuit switched telephony device and each one of the packet switched telephony device and the first circuit switched telephony device.

9. A method comprising:
delivering (Plain Old Telephone Service) POTS signaling, by an auxiliary bridging device, to a coupled POTS telephony device;
supporting, by the auxiliary bridging device, a call pathway to the coupled POTS telephony device;
supporting, by the auxiliary bridging device, a call pathway to a packet switched telephony network;
supporting, by the auxiliary bridging device, a call pathway to a circuit switched telephony network; and
bridging, by the auxiliary bridging device, calls between every two of the POTS telephony device, the circuit switched telephony network, and the packet switched telephony network.

10. A method for operating an auxiliary bridging device having a (Plain Old Telephone Service) POTS telephone interface, a packet switched interface, and a circuit switched interface, the method comprising:
detecting the presence or absence of POTS signaling at the circuit switched interface;
when POTS signaling is not present at the circuit switched interface, the auxiliary bridging device producing and delivering POTS signaling to a coupled POTS telephony device;
when POTS signaling is present at the circuit switched interface, the auxiliary bridging device coupling the circuit switched interface to the POTS telephone interface;
supporting a first call pathway between the POTS telephone interface and the packet switched interface;
supporting a second call pathway between the POTS telephone interface and the packet switched interface.
